# FASCICULE DE BREVET EUROPEEN

(11) **EP 2 522 620 B1**
(45) Date de publication et mention de la délivrance du brevet: **29.05.2013**
(21) Numéro de dépôt: 12165567.4
(22) Date de dépôt: 25.04.2012
(51) Int. Cl.: B66F 9/075, F15B 15/28, B66F 9/24, B66F 17/00, B66F 9/065, B66F 11/04

(54) **Dispositif de mesure de bras télescopique de manutention**
Meßeinrichtung für einen Teleskoparm
Measuring device for a telescopic arm

(30) Priorité: 10.05.2011 FR 1153985
(43) Date de publication de la demande: 14.11.2012
(73) Titulaire: MANITOU BF, 44150 Ancenis (FR)
(72) Inventeur: Robert, René-Luc, 49440 CANDE (FR); Caget, Olivier, 44522 MESANGER (FR)
(74) Mandataire: Kaspar, Jean-Georges

(56) Documents cités:
- EP-A1- 1 923 347
- EP-A1- 2 135 837
- EP-A2- 0 798 260
- EP-A2- 1 728 759
- DE-A1- 4 220 333
- DE-A1- 19 960 376
- DE-A1-102009 023 168

## Description

L'invention est relative à un dispositif de mesure de bras télescopique de manutention.

L'invention est particulièrement utile pour l'indication de la longueur de télescopage d'un bras télescopique de nacelle élévatrice de personnel, ou pour l'indication de la longueur de télescopage d'un bras télescopique de chariot élévateur.

Les bras télescopiques de manutention de type connu comportent généralement plusieurs éléments de section sensiblement rectangulaire à angles arrondis, montés à coulissement relatif avec interposition de patins de glissement.

Généralement, les éléments télescopiques montés à coulissement sont des éléments de plus petite section escamotables à l'intérieur d'éléments fixes de plus grande section.

Pour les nacelles élévatrices de personnel, on connaît des moyens de mesure de longueur de télescopage qui utilisent un moyen mesurant la sortie de l'élément interne ou télescope.

Ce moyen est généralement constitué par un système comportant un enrouleur de câble et un codeur rotatif mesurant l'angle total de rotation de l'enrouleur de câble. L'enrouleur et le codeur rotatif sont généralement montés solidaires de la poutre fixe de plus grande dimension, tandis que l'extrémité distale du câble d'enrouleur est montée solidaire de la partie mobile dont le déplacement doit être mesuré.

Lorsque le bras télescopique se déploie en extension, cette extension provoque ainsi le déroulement du câble qui entraîne à son tour en rotation l'enrouleur. La rotation de l'enrouleur est mesurée par le codeur rotatif qui émet un signal en direction d'un système de traitement pour déterminer la longueur recherchée.

Ce moyen de mesure par déroulement d'une longueur de câble présente plusieurs inconvénients. L'enroulement du câble sur l'enrouleur nécessite généralement un enrouleur de diamètre important, ce qui constitue une pièce encombrante à positionner sur le côté de la poutre maîtresse. Le câble extérieur à la poutre maîtresse est également susceptible d'être endommagé ou rompu lors de manoeuvres ou par suite d'un incident ou accident indésirable.

D'autres moyens connus consistent à placer à l'intérieur même de l'actionneur hydraulique de télescopage des dispositifs de mesure de la course de l'actionneur. Ces dispositifs sont le plus souvent très coûteux et limités à des longueurs d'actionneurs peu élevées.

EP 1 728 759 A divulgue un dispositif de mesure de bras télescopique de manutention selon le préambule de la revendication 1.

Un but de l'invention est de remédier aux inconvénients de la technique connue, en proposant un nouveau dispositif de mesure de bras télescopique de manutention d'encombrement réduit et présentant une bonne fiabilité.

Un autre but de l'invention est de proposer un nouveau dispositif de mesure ergonomique et économique, sans risque d'usure dans le temps ou d'endommagement.

L'invention a pour objet un dispositif de mesure de bras télescopique de manutention, ledit bras télescopique de manutention comportant au moins deux éléments montés à coulissement relatif, ledit dispositif comportant un moyen de mesure de l'extension du bras télescopique, dans lequel le dispositif comporte des moyens de calcul de l'extension de la partie mobile du bras télescopique utilisant les caractéristiques hydrauliques d'un actionneur hydraulique de télescopage, et dans lequel le dispositif comporte un moyen d'ajustement des déplacements calculés à l'aide d'un signal transmis par au moins un moyen de repérage sans contact de la partie mobile du bras télescopique, caractérisé par le fait que la partie mobile du bras télescopique est équipée de plusieurs repères espacés permettant le repérage de leur défilement devant au moins un capteur sans contact solidaire de la partie fixe du bras télescopique.

.Selon d'autres caractéristiques alternatives de l'invention :
- les moyens de calcul de l'extension de la partie mobile du bras télescopique utilisent un débit hydraulique et une durée d'activation de l'actionneur hydraulique de télescopage ;
- les moyens de calcul de l'extension de la partie mobile du bras télescopique utilisent une correction de vitesse de mouvement définie par la consigne donnée par un opérateur ;
- la partie mobile du bras télescopique est équipée de plusieurs repères espacés permettant le repérage de leur défilement devant au moins un capteur sans contact solidaire de la partie fixe du bras télescopique ;
- les repères solidarisés à la partie mobile du bras télescopique sont des repères magnétiques ;
- chaque capteur sans contact solidarisé à la partie fixe du bras télescopique est un capteur magnétique dont la position est réglable ;
- chaque capteur magnétique dont la position est réglable est monté sur un support permettant l'ajustement de sa position.

L'invention sera mieux comprise grâce à la description qui va suivre, donnée à titre d'exemple non limitatif en référence aux dessins annexés dans lesquels :
La figure 1 représente schématiquement un diagramme d'un dispositif selon l'invention.
La figure 2 représente schématiquement une vue partielle de face d'un bras télescopique de manutention équipé pour la mise en oeuvre de l'invention.
La figure 3 représente schématiquement une vue partielle en coupe selon la ligne III-III de la figure 2 d'un bras télescopique équipé conformément à l'invention.
La figure 4 représente schématiquement une vue partielle en coupe selon la ligne IV-IV de la figure 2 d'un bras télescopique équipé conformément à l'invention.

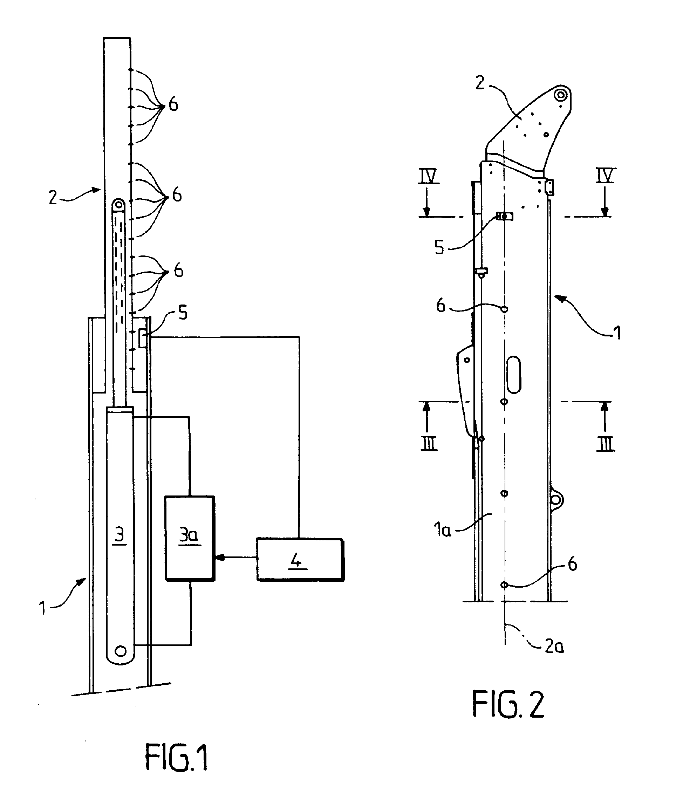

En référence aux figures 1 à 4, les éléments identiques ou fonctionnellement équivalents sont repérés par des chiffres de référence identiques.

Sur la figure 1, un bras télescopique comporte un élément fixe (1) destiné à être monté sur un châssis, par exemple un châssis de nacelle élévatrice de personnel. Un élément ou partie mobile (2) est monté à coulissement dans la partie ou élément fixe (1), sous l'action d'un actionneur hydraulique (3) de type connu en soi.

Une centrale de commande contenant des moyens de calcul (4) commande un système hydraulique (3a) agissant sur l'actionneur hydraulique (3) pour provoquer le télescopage de la partie mobile (2) coulissant dans la partie fixe (1).

La partie mobile (2) comporte une pluralité de repères (6) aptes à être détectés par une détection sans contact par un capteur (5) monté solidaire de la partie fixe (1).

Les moyens (4) de calcul de l'extension de la partie mobile (2) du bras télescopique utilisent de préférence un débit hydraulique produit par le système hydraulique (3a), ce débit hydraulique agissant sur l'actionneur hydraulique (3) et provoquant son déplacement et celui de la partie mobile (2) qu'il actionne dans un sens de déplacement déterminé.

Les moyens (4) de calcul de l'extension de la partie mobile (2) du bras télescopique utilisent également une indication relative à la durée d'activation de l'actionneur hydraulique (3) de télescopage.

Les moyens (4) de calcul de l'extension de la partie mobile (2) du bras télescopique peuvent également utiliser avantageusement une correction liée à la consigne donnée par un opérateur de la machine à laquelle le dispositif de mesure et le bras télescopique selon l'invention sont destinés.

Sur la figure 2, la partie distale (1a) de la partie fixe (1) du bras télescopique porte un capteur magnétique (5) monté de manière réglable en regard d'une ligne (2a) de repérage, le long de laquelle sont implantés des repères (6) aptes à être détectés par le capteur magnétique (5).

Les emplacements des repères (6) sont avantageusement disposés à intervalles réguliers, de préférence à intervalles équidistants.

L'invention s'étend également aux cas d'intervalles non équidistants, mais prédéfinis selon une règle d'échelonnement prédéterminée.

Les repères (6) de la partie mobile (2) aptes à être détectés par le capteur magnétique (5) de la partie fixe (1) assurent le recalage des moyens de calcul (4), notamment dans le cas d'une variation des caractéristiques hydrauliques de la machine, liée par exemple à l'usure ou à une imprécision due à une perte de repère lors d'un changement de sens de télescopage.

De cette manière, les paramètres de calcul déterminant la vitesse du mouvement et la durée d'utilisation du mouvement à partir des caractéristiques hydrauliques relatives au vérin (3) d'actionnement sont réactualisés au passage de chaque repère (6) devant le capteur (5), en comparant la courbe théorique de mouvement de la partie mobile (2) par rapport à la partie fixe (1) et la position réelle de cette partie mobile (2) donnée par la détection d'un repère (6) par le capteur (5) de la partie fixe (1).

L'invention permet ainsi de vérifier en continu le fonctionnement des moyens (4) de calcul et de corriger en conséquence le résultat donné par le programme d'évaluation ou l'algorithme de calcul de la position de la partie mobile (2) grâce aux caractéristiques hydrauliques relatives à l'actionneur (3) de télescopage.

Cette corrélation en continu permet ainsi de s'affranchir des imprécisions dues par exemple à une faible fuite interne de fluide hydraulique, aux volumes morts du circuit hydraulique, ou à tout autre phénomène hydraulique susceptible de fausser l'algorithme de calcul permettant la détermination de la position de la partie mobile (2).

Le recalage périodique grâce aux repères (6) permet également d'indiquer ou d'afficher des anomalies de fonctionnement du circuit hydraulique dans le cas où celui-ci engendre des calculs présentant une erreur supérieure à une incertitude prédéterminée.

Selon une variante avantageuse de l'invention, le dispositif de mesure comporte trois capteurs inductifs (5) permettent de définir le point de rentrée complète de la partie mobile (2), un point intermédiaire et le point de sortie complète de la partie mobile (2)

Ces trois autres capteurs inductifs (5) permettent de contrôler par comptage, la présence de tous les repères (6) magnétiques.

Un défaut est indiqué si un repère (6) magnétique est manquant, et le dispositif est mis en position de sécurité tant que le défaut n'est pas levé par l'opérateur.

Grâce à l'invention, la mesure de la partie mobile (2) d'un bras télescopique s'effectue de manière simple et rapide, sans risque d'usure dans le temps en raison de l'absence de contact entre les repères (6) détectés et le capteur (5) de détection.

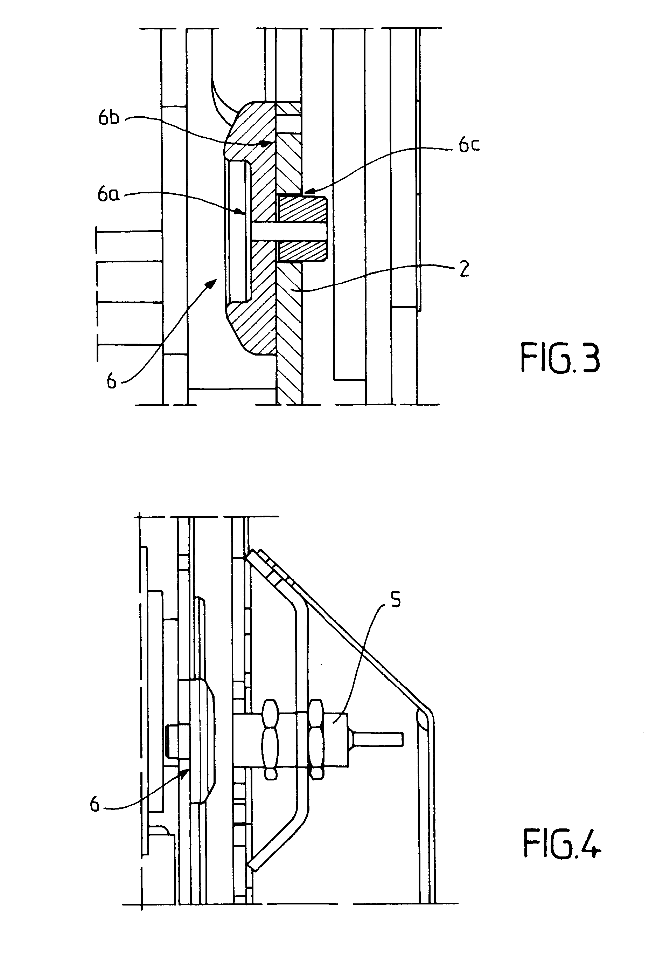

Sur la figure 3, un repère (6) magnétique est constitué sous forme d'un plot (6a) monté à un emplacement prédéfini.

Chaque emplacement prédéfini est usiné de préférence par un usinage de précision tel qu'un découpage par laser d'un emplacement d'insertion dans un côté ou un flanc de la partie mobile (2) du bras télescopique.

Le plot (6a) est monté dans un support (6b) présentant un pied cylindrique (6c) monté dans l'alésage pratiqué par découpage laser dans un flanc du tube de la partie mobile (2).

Le support (6b) est solidarisé au tube de la partie mobile (2) par vissage ou par soudage, ou par tout autre moyen de solidarisation mécanique équivalent.

Le plot magnétique (6a) est monté dans son support (6b) de manière indémontable, par exemple par un montage indémontable dans une cavité du support magnétique (6b).

La surface de détection correspondant au plot magnétique (6a) est de préférence supérieure à 4 cm², de manière à assurer la détection du repère (6) dans toutes conditions opératoires.

Sur la figure 4, un capteur (5) de détection magnétique est représenté en position de détection d'un plot magnétique (6) solidaire de la partie mobile (2).

Le capteur (5) est fixé sur un support (7) solidaire de la partie fixe (1), dans lequel il est monté de préférence par vissage, de manière à permettre un réglage de l'extrémité du capteur (5) en regard du plot magnétique (6).

Le réglage de la distance entre l'extrémité du capteur (5) et la surface du plot magnétique (6) permet ainsi de positionner et de centrer cette extrémité par rapport au plot magnétique (6), ainsi que de régler leur écartement respectif pour garantir une détection efficace en toutes conditions opératoires.

De préférence le capteur magnétique (5) est un capteur comportant un écrou et un contre-écrou de réglage de positionnement.

La présence de l'écrou et du contre-écrou de positionnement permet en outre l'échange du capteur en cas de dysfonctionnement.

## Revendications

1. Dispositif de mesure de bras télescopique de manutention, ledit bras télescopique de manutention comportant au moins deux éléments (1,2) montés à coulissement relatif, ledit dispositif comportant un moyen de mesure de l'extension du bras télescopique, dans lequel le dispositif comporte des moyens (4) de calcul de l'extension de la partie mobile (2) du bras télescopique utilisant les caractéristiques hydrauliques d'un actionneur hydraulique (3) de télescopage, et dans lequel le dispositif comporte un moyen d'ajustement des déplacements calculés à l'aide d'un signal transmis par au moins un moyen (5,6) de repérage sans contact de la partie mobile (2) du bras télescopique, **caractérisé par le fait que** la partie mobile (2) du bras télescopique est équipée de plusieurs repères (6) espacés permettant le repérage de leur défilement devant au moins un capteur (5) sans contact solidaire de la partie fixe du bras télescopique.

2. Dispositif de mesure de bras télescopique de manutention selon la revendication 1, **caractérisé par le fait que** les moyens de calcul (4) de l'extension de la partie mobile (2) du bras télescopique utilisent un débit hydraulique et une durée d'activation de l'actionneur (3) hydraulique de télescopage.

3. Dispositif de mesure de bras télescopique de manutention selon la revendication 1 ou 2, **caractérisé par le fait que** les moyens de calcul (4) de l'extension de la partie mobile (2) du bras télescopique utilisent une correction de vitesse de mouvement définie par la consigne donnée par un opérateur.

4. Dispositif de mesure de bras télescopique de manutention selon la revendication 1, **caractérisé par le fait que** les repères (6) solidarisés à la partie mobile du bras télescopique sont des repères magnétiques.

5. Dispositif de mesure de bras télescopique de manutention selon la revendication 1 ou 4, **caractérisé par le fait que** chaque capteur (5) sans contact solidarisé à la partie fixe du bras télescopique est un capteur magnétique dont la position est réglable.

6. Dispositif de mesure de bras télescopique de manutention selon la revendication 5, **caractérisé par le fait que** chaque capteur magnétique (5) dont la position est réglable est monté sur un support (7) permettant l'ajustement de sa position.

## Patentansprüche

1. Messvorrichtung für einen Handhabungs-Teleskoparm, wobei der Handhabungs-Teleskoparm mindestens zwei Elemente (1, 2) aufweist, die relativ gleitend montiert sind, wobei die Vorrichtung ein Messmittel der Streckung des Teleskoparms aufweist, wobei die Vorrichtung Berechnungsmittel (4) der Streckung des beweglichen Abschnitts (2) des Teleskoparms aufweist, die die hydraulischen Eigenschaften eines hydraulischen Teleskopaktuators (3) verwenden, und wobei die Vorrichtung ein Einstellungsmittel der Verlagerungen aufweist, die mit Hilfe eines Signals berechnet werden, das von mindestens einem kontaktlosen Ortungsmittel (5,6) des beweglichen Abschnitts (2) des Teleskoparms übertragen wird, **dadurch gekennzeichnet, dass** der bewegliche Abschnitt (2) des Teleskoparms mit mehreren beabstandeten Markierungen (6) ausgestattet ist, die die Ortung ihres Durchlaufs vor mindestens einem kontaktlosen Sensor (5) erlauben, der mit dem starren Abschnitt des Teleskoparms verbunden ist.

2. Messvorrichtung für einen Handhabungs-Teleskoparm nach Anspruch 1, **dadurch gekennzeichnet, dass** die Berechnungsmittel (4) der Streckung des beweglichen Abschnitts (2) des Teleskoparms einen hydraulischen Durchsatz und eine Aktivierungsdauer des hydraulischen Teleskopierungsaktuators (3) verwenden.

3. Messvorrichtung für einen Handhabungs-Teleskoparm nach Anspruch 1 oder 2, **dadurch gekennzeichnet, dass** die Berechnungsmittel (4) der Streckung des beweglichen Abschnitts (2) des Teleskoparms eine Korrektur der Bewegungsgeschwindigkeit verwenden, die durch den von einem Bediener gegebenen Sollwert festgelegt ist.

4. Messvorrichtung für einen Handhabungs-Teleskoparm nach Anspruch 1, **dadurch gekennzeichnet, dass** die mit dem beweglichen Abschnitt des Teleskoparms verbundenen Markierungen (6) magnetische Markierungen sind.

5. Messvorrichtung für einen Handhabungs-Teleskoparm nach Anspruch 1 oder 4, **dadurch gekennzeichnet, dass** jeder kontaktlose Sensor (5), der mit dem starren Abschnitt des Teleskoparms verbunden ist, ein magnetischer Sensor ist, dessen Position einstellbar ist.

6. Messvorrichtung für einen Handhabungs-Teleskoparm nach Anspruch 5, **dadurch gekennzeichnet, dass** jeder magnetische Sensor (5), dessen Position einstellbar ist, auf einem Halter (7) montiert ist, der die Einstellung seiner Position erlaubt.

## Claims

1. A measuring device for a telescoping handling arm, said telescoping handling arm including at least two elements (1, 2) slidably mounted relative to one another, said device including a means for measuring the extension of the telescoping arm, wherein the device includes means (4) for computing the extension of the moving part (2) of the telescoping arm using the hydraulic characteristics of a hydraulic telescoping actuator (3), and wherein the device includes at least one means for adjusting the movements computed using a signal transmitted by at least one contactless identification means (5, 6) of the moving part (2) of the telescoping arm, **characterized in that** the moving part (2) of the telescoping arm is equipped with several spaced apart reference marks (6) making it possible to identify their progression in front of at least one contactless sensor (5) secured to the stationary part of the telescoping arm.

2. The measuring device for a telescoping handling arm according to claim 1, **characterized in that** the means (4) for computing the extension of the moving part (2) of the telescoping arm use a hydraulic flow rate and an activation time of the hydraulic telescoping actuator (3).

3. The measuring device for a telescoping handling arm according to claim 1 or 2, **characterized in that** the means (4) for computing the extension of the moving part (2) of the telescoping arm use a movement speed correction defined by the instruction given by an operator.

4. The measuring device for a telescoping handling arm according to claim 1, **characterized in that** the reference marks (6) secured to the moving part of the telescoping arm are magnetic references.

5. The measuring device for a telescoping handling arm according to claim 1 or 4, **characterized in that** each contactless sensor (5) secured to the stationary part of the telescoping arm is a magnetic sensor whereof the position is adjustable.

6. The measuring device for a telescoping handling arm according to claim 5, **characterized in that** each magnetic sensor (5) whereof the position is adjustable is mounted on a support (7) making it possible to adjust its position.
